Europäisches Patentamt

European Patent Office

Office européen des brevets

(19)

(11) Publication number: 0 399 603
A2

(12) EUROPEAN PATENT APPLICATION

(21) Application number: 90201269.9

(51) Int. Cl.⁵: **F16L 37/28, F16L 37/12**

(22) Date of filing: 18.05.90

(30) Priority: 26.05.89 IT 2065989

(43) Date of publication of application:
28.11.90 Bulletin 90/48

(84) Designated Contracting States:
DE FR GB IT NL

(71) Applicant: Bormioli, Giorgio
Via Galileo Galilei, 21
I-35100 Padova(IT)

(72) Inventor: Bormioli, Giorgio
Via Galileo Galilei, 21
I-35100 Padova(IT)

(74) Representative: Mittler, Enrico et al
c/o Marchi & Mittler s.r.l. Viale Lombardia, 20
I-20131 Milano(IT)

(54) Connector device for pipes with ejection of members of separation situated between fluid products of different characteristics fed in succession.

(57) The connector device comprises a tubular-shaped casing (1) provided with one extremity (2) suitable for fastening to a fixed pipe (16) and with one extremity (4) on which grasping members (5) for the connection to a movable pipe (17) are mounted and a cut-off valve (10) situated between said extremities (2, 4) so as to alternatively open and close the passage for a fluid product fed through said fixed pipe. The cut-off valve (10) is provided with stopping means (20) for a member of separation (21), if any, between different fluid products, which stopping means (20) are situated at one extremity of an internal passage (18) of the valve (10) downstream from an area (11) of the valve which is sealed with respect to the fluid product, and the connector casing (1) is provided with a lateral port (12) for discharging said member of separation (21) with which said internal passage (18) of the valve (10) and said stopping means (20) are arranged in communication when said cut-off valve (10) is in the closed position. There are also provided ejection means (25) to transfer the member of separation (21) engaged by said stopping means (20) from said internal passage (18) of the valve (10) to said lateral discharge port (12) for its ejection when the valve (10) is in the open position.

Fig.3

## Connector device for pipes with ejection of members of separation situated between fluid products of different characteristics fed in succession.

The present invention relates to a connector device for pipes with ejection of members of separation situated between fluid products of different characteristics fed in succession.

It is known that when it is desired to connect two pipes which are movable one with respect to the other, say, one on a ship and the other on an unloading pier, it is necessary to use a connector device which must offer particular guarantees of quick operation both in the coupling stage and in the uncoupling stage of the pipes.

Connector devices suitable for this type of application are described in Italian patents No. 804342 and No. 844387 and comprise a tubular-shaped casing provided with a cut-off valve and having an extremity suitable for fastening to the fixed pipe and a flanged extremity on which grasping members (clamps or such like) are mounted which can be operated so as to move in different axial planes, forming dihedrons equal to one another, to engage or disengage with a corresponding flanged extremity of the movable pipe. The operation of such grasping members is obtained in both cases by respective variable-length elements which interact, each, between a point of the grasping member and a point of the pipe to the rear of the flanged extremity: these can be either normal hydraulic or pneumatic jacks, or rods having elastically-variable length, each of which is spherically hinged on one side on a respective grasping member and on the other side on a common thrust bearing or ring which can be made to rotate round the pipe so as to displace the elastic rods from a position of where they are substantially in the plane of movement of the respective grasping members and a position which is at an angle with respect to such planes of movement.

It is also known that pipes on the ground and the corresponding connectors are sometimes used for the passage of fluid products of different characteristics, say, fuel oil and petrol.

In this case the products are separated and spaced one from the other by means of flexible casks or more generally by means of slidablly tight casings which run inside the fixed pipe between one product and the other.

A problem in that case is that of providing for the ejection of the cask when it has reached the final connector.

According to a known solution the terminal connector has a collection basket for the cask into which the cask itself is inserted at the end of its run.

Such a basket constitutes an element of length and weight with respect to the normal connector and, since it is not at the extremity of the product supply line, it inevitably determines the collection of a small quantity of product downstream from the cut-off valve.

The object of the present invention is to accomplish a connector device that is to be of essentially traditional construction, be at the extremity of the line, does not leave a quantity of product downstream from the valve and at the same allows the quick and easy ejection of the cask or casks, if any, situated between different fluid products.

According to the invention such object is attained with a connector device for pipes, comprising a tubular-shaped casing provided with one extremity suitable for fastening to the fixed pipe and with one extremity on which grasping members for the connection to a movable pipe are mounted and a cut-off valve situated between said extremities so as to alternatively open and close the passage for a fluid product fed through said fixed pipe, characterized in that said cut-off valve is provided with stopping means for a member of separation between different fluid products, said stopping means being situated at one extremity of an internal passage of the valve downstream from an area of said valve which is sealed with respect to the fluid product, and said connector casing is provided with a lateral port for discharging said member of separation, with which said internal passage of the valve and said stopping means are arranged in communication when said cut-off valve is in the closed position, there being provided ejection means to transfer the member of separation engaged by said stopping means from said internal passage of the valve to said lateral port of the connector casing for its ejection when said valve is in the open position.

The adoption of the connector device according to the invention allows the solution of all the problems connected with the extraction and recovery of the member of separation, without it determining a variation of length and weight and without causing residues of product downstream from the valve. Such solution does, moreover, ensure the complete separation between the different fluid products together with the cleanliness of the connector.

An example of the connector device according to the invention is shown for greater clarity in the enclosed drawings, wherein:

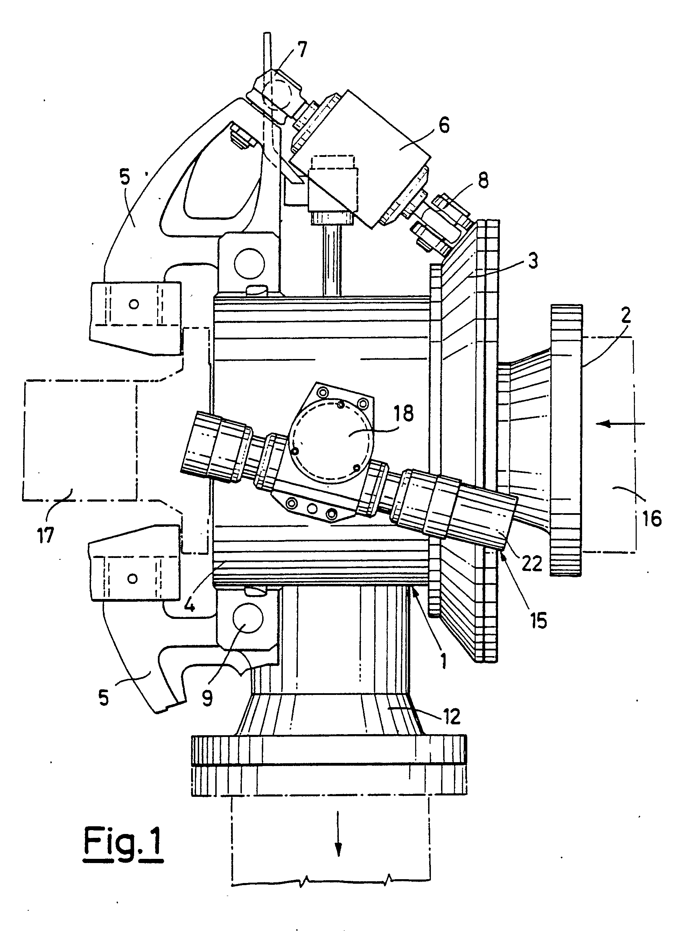

Fig. 1 is a front view of the connector device according to the invention;

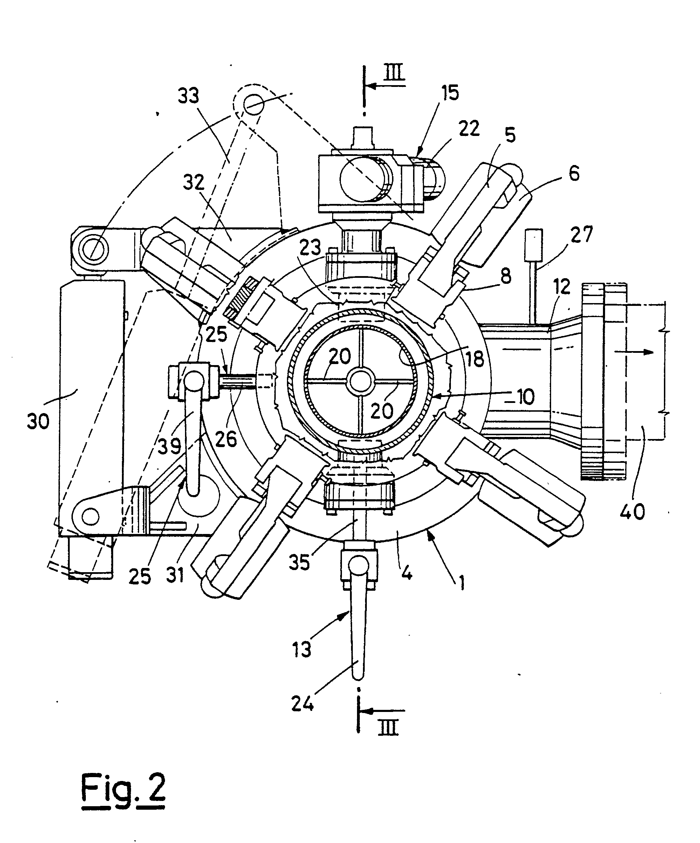

Fig. 2 is a partially sectioned view from the left with respect to Fig. 1;

Fig. 3 is a longitudinal cross-section of Fig. 2;

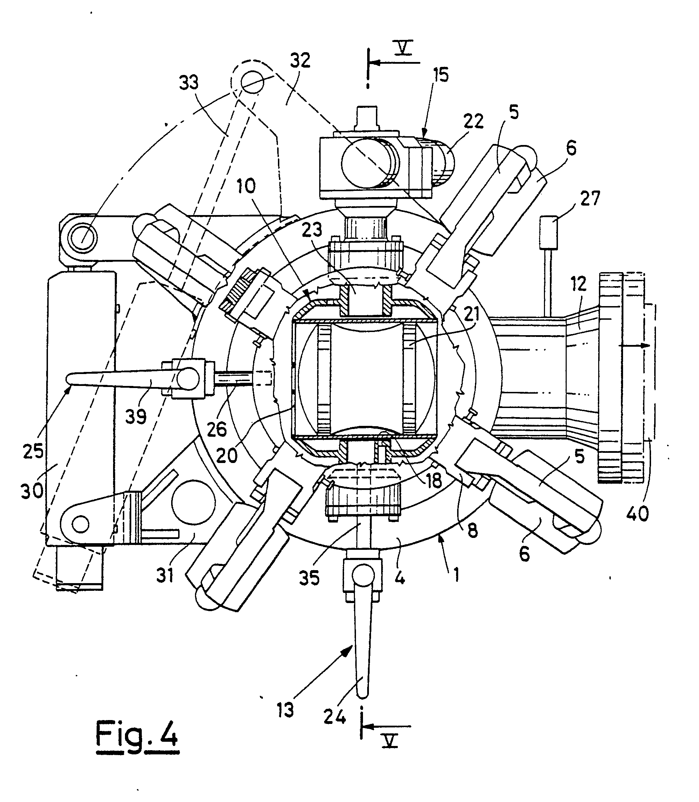

Fig. 4 is the same view illustrated in Fig. 2 with the cut-off element of the fluid product in the closed position;

Fig. 5 is a longitudinal cross-section of Fig. 4.

The connector device shown in the drawings comprises a tubular-shaped casing 1 provided with one extremity 2 suitable for fastening to a fixed pipe 16 and an extremity 4 suitable for fastening to a movable pipe 17. On the extremity 4 there is rotatably mounted by means of cylindrical pivots 9 a plurality of grasping members 5, in the specific case clamps, uniformly spaced along the circumference. Said grasping members 5 are connected to a thrust ring 3 rotatably mounted on the connector casing by means of a plurality of elastic rods 6, each of which is connected to the respective grasping member 5 by means of a spherical coupling 7 and to the rotating ring 3 by means of a spherical coupling 8. The rotation of ring 3 is provided by a cylinder 30 fastened to the connector casing by means of a bracket 31 and provided with a piston stem 33 fastened to ring 3 by means of a bracket 32.

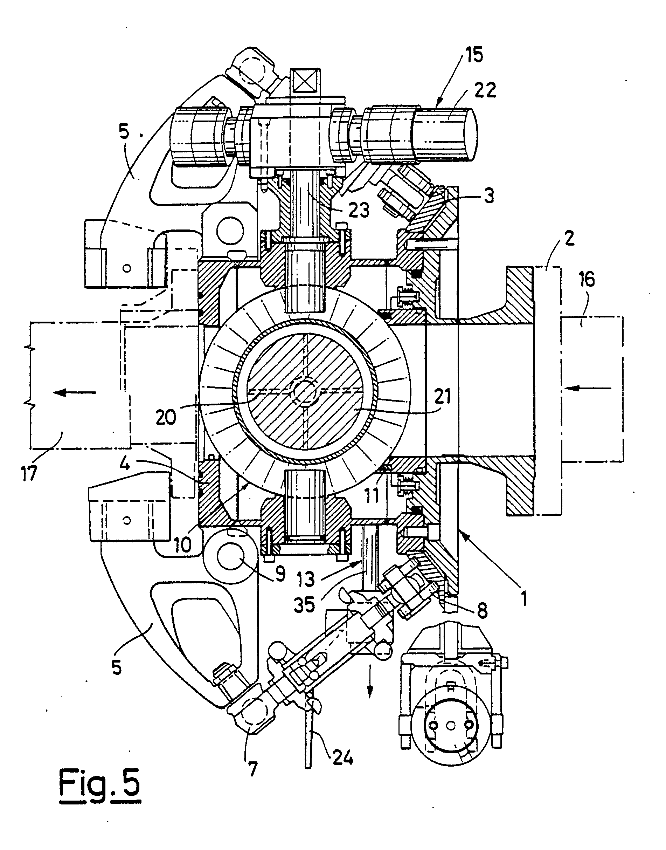

Between said extremities 2 and 4 there is also situated a spherical cut-off valve 10 with a central passage 18 one of whose extremities co-operates with a seal 11 upstream from the valve itself to ensure the stoppage of the fluid product when the valve is in the closed position of Fig. 5.

At the other extremity of the internal passage 18 of valve 10 there is a cross-element 20 which when the valve is open has the task of allowing the fluid product to pass and of stopping a cask 21 or other member of separation, if any, placed between two fluid products of different characteristics fed in succession.

To said casing of connector 1 there is associated a mechanism for controlling the rotation of valve 10, indicated as a whole with 15 (Fig.s 1, 3), which comprises a rack moved by a hydraulic or pneumatic cylinder 22 and a pinion fastened to one end of a rotatable shaft 23 to which valve 10 is fastened.

The casing of connector 1 has, on one side, a cask discharge port 12 which has a flanged extremity for the connection, with appropriate means, of a duct 40 for the reovery of cask 21 according to the methods which shall be described later.

To the body of connector 1 there is associated a draining device 13 constituted by a vertical duct 35 controlled by a valve 24.

To the body of connector 1 there is also associated an ejection device 25 of cask 21 constituted by a duct 26 aligned with discharge port 12, in which it is possible to insert a rod for the ejection of cask 21.

To the discharge port 12 there is associated a pressure gauge 27 to measure the pressure inside it.

In operation the connector device is first of all fastened to a fixed pipe 16 at its extremity 2 and is also connected to the movable pipe 17 at its extremity 4 by means of grasping members 5, which in a way known in itself from patent No. 844387 are made to close by the rotation of ring 3 caused by cylinder 30.

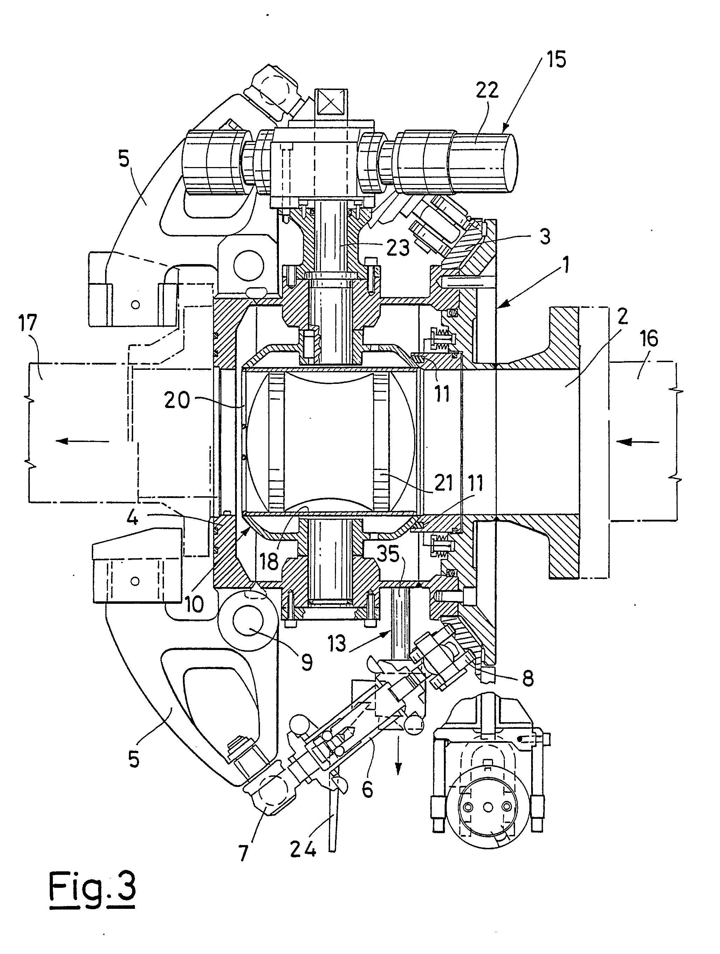

Once the connection has been made, the transshipment of the product is started by moving valve 10 from the initial closed position to the open position illustrated in Fig. 3. If the products are two or more fed in succession with the interposition of cask 21, the arrival of the cask opposite valve 10 causes its engagement with cross-element 20. From this position the valve is displaced to the closed position (Fig.s 4 and 5) by means of mechanism 15 controlling the rotation of the valve.

In particular the latter's rack, moved by hydraulic cylinder 22, engages the piston fastened to the extremity of the rotatable shaft 23 and causes its rotation.

With such rotation of valve 10 its internal passage 18 is aligned with discharge port 12, while the internal passage of the connector upstream from the valve is closed by the engagement of the spherical casing of the valve itself with the seal 11.

Through valve 39 there is then opened duct 26 through which it is possible to insert a rod which passes through the cross-element and pushes the cask out of the internal passage 18 of valve 10 and then out of the connector through discharge port 12. The discharge duct 40 allows the re-use of the cask, if so desired.

Simultaneously or immediately afterwards the draining operation is carried out of the fluid product remaining in the internal passage 18 of valve 10 when the latter is closed.

In particular by means of valve 24 the vertical duct 35 is opened through which the residual fluid product is eliminated.

## Claims

1. Connector device for pipes, comprising a tubular-shaped casing (1) provided with one extremity (2) suitable for fastening to a fixed pipe (16) and with one extremity (4) on which grasping members (5) for the connection to a movable pipe (17) are mounted and a cut-off valve (10) situated between said extremities so as to alternatively open and close the passage for a fluid product fed through said fixed pipe, characterized in that said cut-off valve (10) is provided with stopping means (20) for a member of separation (21) between different fluid products, said stopping means (20) being situated at one extremity of an internal passage (18) of the valve (10) downstream from an area (11) of said valve (10) which is sealed with respect to the fluid product, and said connector casing (1) is provided with a lateral port (12) for discharging said member of separation (21), with which said internal passage (18) of the valve (10) and said stopping means (20) are arranged in communication when said cut-off valve (10) is in the closed position, there being provided ejection means (25) to transfer the member of separation engaged by said stopping means (20) from said internal passage (18) of the valve (10) to said lateral port (12) of the connector casing (1) for its ejection when said valve (10) is in the open position.

2. Connector device according to claim 1, characterized in that said stopping means (20) are constituted by a cross- element (20) which when valve (10) is open has the task of allowing the fluid product to pass and of stopping a cask (21) or other member of separation, if any, placed between two fluid products of different characteristics fed in succession.

3. Connector device according to claim 1, characterized in that said ejection means (25) comprise a duct (26), with a corresponding valve (39), which is aligned with the discharge port (12) and inside which a rod for the ejection of the cask (21) may be inserted.

4. Connector device according to claim 1, characterized in that there are provided draining means (13) of the fluid product remaining in said internal passage (18) of valve (10) when the valve itself is closed, said draining means (13) comprising a vertical duct (35) controlled by a valve (24).

**Fig.1**

**Fig.2**

## Fig.3

EP 0 399 603 A2

**Fig.4**

**Fig.5**